(19) Europäisches Patentamt / European Patent Office / Office européen des brevets

(11) **EP 3 796 507 A1**

(12) **EUROPEAN PATENT APPLICATION**
published in accordance with Art. 153(4) EPC

(43) Date of publication:
**24.03.2021 Bulletin 2021/12**

(51) Int Cl.:
***H02J 3/38*** *(2006.01)*

(21) Application number: **19808084.8**

(22) Date of filing: **24.05.2019**

(86) International application number:
**PCT/CN2019/088354**

(87) International publication number:
**WO 2019/223785 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2018 CN 201810508894**

(71) Applicant: **ZTE Corporation Shenzhen, Guangdong 518057 (CN)**

(72) Inventors:
• **TANG, Hongyang Shenzhen, Guangdong 518057 (CN)**
• **LI, Yuan Shenzhen, Guangdong 518057 (CN)**
• **YU, Songsen Shenzhen, Guangdong 518057 (CN)**
• **WEI, Xuehai Shenzhen, Guangdong 518057 (CN)**
• **LI, Jianguo Shenzhen, Guangdong 518057 (CN)**

(74) Representative: **Betten & Resch Patent- und Rechtsanwälte PartGmbB Maximiliansplatz 14 80333 München (DE)**

(54) **DIRECT-CURRENT BUS VOLTAGE REFERENCE VALUE ADJUSTMENT METHOD AND APPARATUS, AND PHOTOVOLTAIC GRID-CONNECTED INVERTER**

(57) Provided are a direct-current bus voltage reference value adjustment method and apparatus, and a photovoltaic grid-connected inverter. The method comprises: determining a bus voltage stabilizing value of a photovoltaic grid-connected inverter according to preset parameters, wherein the pre-set parameters at least comprise: a grid interconnection point voltage module value of a power grid and a modulation coefficient of the photovoltaic grid-connected inverter; and when determining that a high voltage fault occurs in a power grid corresponding to the photovoltaic grid-connected inverter, adjusting a direct-current bus voltage reference value of the photovoltaic grid-connected inverter to the bus voltage stabilizing value. Using the above-mentioned technical solution solves the problem in the existing technology that accuracy and controllability are low in an adjustment strategy where a direct-current bus voltage reference value of a photovoltaic grid-connected inverter is directly increased to a limit value, improving the accuracy and controllability of the adjustment strategy.

determine bus voltage regulation value of the photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter — S102

adjust direct-current bus voltage reference value of the photovoltaic grid-connected inverter to a bus voltage stabilizing value in response to determining that the power grid corresponding to the photovoltaic grid-connected inverter has a high-voltage fault — S104

**FIG. 1**

**Description**

**TECHNICAL FIELD**

The present disclosure relates to the field of new energy resources, and more particularly, to a method and an apparatus for adjusting a direct-current bus voltage reference value, and a photovoltaic grid-connected inverter.

**BACKGROUND**

With the rapid development of photovoltaic power generation technology, a total installed capacity of a photovoltaic power station continues to increase, and the proportion of photovoltaic systems connected to a power grid is increasing. The operation of the photovoltaic power station in the case of a fault occurring in the power grid has directly affected the safety and stability of a power system. When the power grid fails, if the photovoltaic power generation system is disconnected from the power grid and fails to provide frequency and voltage support for the power grid like conventional energy power generation, which is easy to cause a chain trip of adjacent photovoltaic power stations, resulting in a large-scale blackout, thereby affecting the safe operation of the power grid. The "Technical Regulations for Connecting Photovoltaic Power Stations to the Power Grid" promulgated by the State Grid Corporation of China has stipulated that large and medium-sized photovoltaic power stations should have certain high and low voltage ride-through capabilities. That is, when a power frequency voltage at a grid-connected site is within a range of 1.1 to 1.2 times, a grid-connected inverter should have a capability to run for 10s each time; and when a power frequency voltage at the grid-connected site is within a range of 1.2 to 1.3 times, the grid-connected inverter should have a capability to run for 500s each time.

An existing photovoltaic power station can keep the inverter output from overcurrent and have a low voltage ride-through capability when a grid voltage drops. However, most photovoltaic power stations do not have high-voltage fault ride-through capabilities when a high-voltage fault occurs in the power grid. In fact, the grid voltage swell in the actual power system is often accompanied by the grid voltage drop. In a voltage recovery stage after the grid voltage drop fault is cleared, the investment of a large-capacity capacitor compensator, the sudden removal of a load, and the like may cause the grid voltage swell. When a high-voltage fault occurs in the power grid, the photovoltaic power cannot be delivered out. The energy will flow back into the photovoltaic grid-connected inverter from the power grid, such that a direct-current bus voltage of the inverter rises rapidly and is out of control, which eventually causes the photovoltaic grid-connected inverter to shut down and disconnect from the power grid. The technical scheme generally adopted in the existing technology is to directly increase a direct-current bus voltage reference value of the photovoltaic grid-connected inverter to a limit value, but such a technical scheme cannot accurately adjust the direct-current bus voltage reference value.

With respect to the problem that an adjustment strategy of directly increasing the direct-current bus voltage reference value of the photovoltaic grid-connected inverter to a limit value in the existing technology is low in accuracy and controllability, no effective technical scheme has been proposed yet.

**SUMMARY**

Some embodiments of the present disclosure provide a method and an apparatus for adjusting a direct-current bus voltage reference value, and a photovoltaic power-grid inverter, so as to at least solve the problem in the existing technology that the accuracy and controllability are low in an adjustment strategy where the direct-current bus voltage reference value of a photovoltaic grid-connected inverter is directly increased to a limit value.

According to an embodiment of the present disclosure, a method for adjusting a direct-current bus voltage reference value is provided, which includes:

determining a bus voltage stabilizing value of a photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter; and

adjusting the direct-current bus voltage reference value of the photovoltaic grid-connected inverter to the bus voltage stabilizing value in response to determining that the power grid corresponding to the photovoltaic grid-connected inverter has a high-voltage fault.

According to another embodiment of the present disclosure, a photovoltaic grid-connected inverter is provided, which includes:

a processor; and

a memory configured to store an instruction executable by the processor;

wherein, the processor is configured to determine a bus voltage stabilizing value of the photovoltaic grid-connected inverter according to a plurality of preset parameters, and adjust the direct-current bus voltage reference value of the photovoltaic grid-connected inverter to the bus voltage stabilizing value in response to determining that the power grid corresponding to the photovoltaic grid-connected inverter has a high-voltage fault, wherein the plurality of preset parameters at least include a voltage modulus at a grid-connected site of the power grid, and a modulation coefficient of the photovoltaic grid-connected inverter.

According to another embodiment of the present disclosure, an apparatus for adjusting a direct-current bus voltage reference value is provided, which includes:

a determination module, which is configured to determine a bus voltage stabilizing value of the photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter; and

an adjustment module, which is configured to adjust a direct-current bus voltage reference value of the photovoltaic grid-connected inverter to the bus voltage stabilizing value in response to determining that the power grid corresponding to the photovoltaic grid-connected inverter has a high-voltage fault.

According to another embodiment of the present disclosure, a photovoltaic power station is provided, which includes the photovoltaic grid-connected inverter described in any one of the above embodiments.

According to another embodiment of the present disclosure, a storage medium storing a computer program which is configured to, when executed, perform the method described in any one of the above embodiments.

By means of the present disclosure, the bus voltage stabilizing value of the photovoltaic grid-connected inverter can be determined according to the plurality of preset parameters, and when a high-voltage fault occurs in the power grid corresponding to the photovoltaic grid-connected inverter, the direct-current bus voltage reference value of the photovoltaic grid-connected inverter is adjusted to the bus voltage stabilizing value, rather than being directly adjusted to a limit value as in the existing technology, thereby solving the problem in the existing technology that the accuracy and controllability are low in an adjustment strategy where the direct-current bus voltage reference value of a photovoltaic grid-connected inverter is directly increased to a limit value and improving the accuracy and controllability of the adjustment strategy.

## BRIEF DESCRIPTION OF DRAWINGS

The accompanying drawings are provided for a further understanding of the present disclosure, and constitute a part of the description. The exemplary embodiments of the present disclosure and their descriptions are used to explain the present disclosure, and are not intended to limit the present disclosure, in which:

FIG. 1 is a flowchart of a method for adjusting a direct-current bus voltage reference value according to an embodiment of the present disclosure;

FIG. 2 is a structural block diagram of a photovoltaic grid-connected inverter according to an embodiment of the present disclosure;

FIG. 3 is a structural block diagram of a direct-current bus voltage reference value adjustment apparatus according to an embodiment of the present disclosure;

FIG. 4 is another structural block diagram of a direct-current bus voltage reference value adjustment apparatus according to an embodiment of the present disclosure;

FIG. 5 is a structural block diagram of a photovoltaic grid-connected inverter according to a preferred embodiment of the present disclosure;

FIG. 6 is a control diagram of the photovoltaic grid-connected inverter under normal conditions of a power grid according to a preferred embodiment of the present disclosure;

FIG. 7 is a schematic diagram of a vector principle of an optimal control algorithm for a direct-current bus according to a preferred embodiment of the present disclosure;

FIG. 8 is an external characteristic diagram of an optimal control algorithm for a direct-current bus according to a preferred embodiment of the present disclosure;

FIG. 9 is a control block diagram of a photovoltaic grid-connected inverter under a high-voltage fault of a power grid according to a preferred embodiment of the present disclosure; and

FIG. 10 is a control flowchart of a high-voltage ride-through system of a photovoltaic grid-connected inverter according to a preferred embodiment of the present disclosure.

## DETAILED DESCRIPTION

The present disclosure will be described in detail below with reference to the accompanying drawings and in conjunction with the embodiments. It is to be noted that if not in collision, the embodiments and features in the present disclosure may be combined with each other.

It should be noted that the terms "first" and "second" in the specification and claims of the present disclosure and the above-mentioned drawings are used to distinguish similar objects, but not necessarily used for describing a specific sequence or a precedence order.

Embodiment one

The technical scheme in this embodiment of the present disclosure is applicable to a photovoltaic grid-connected inverter. A power grid is generally provided with a plurality of photovoltaic substations each of which is generally provided with a plurality of photovoltaic grid-connected inverters.

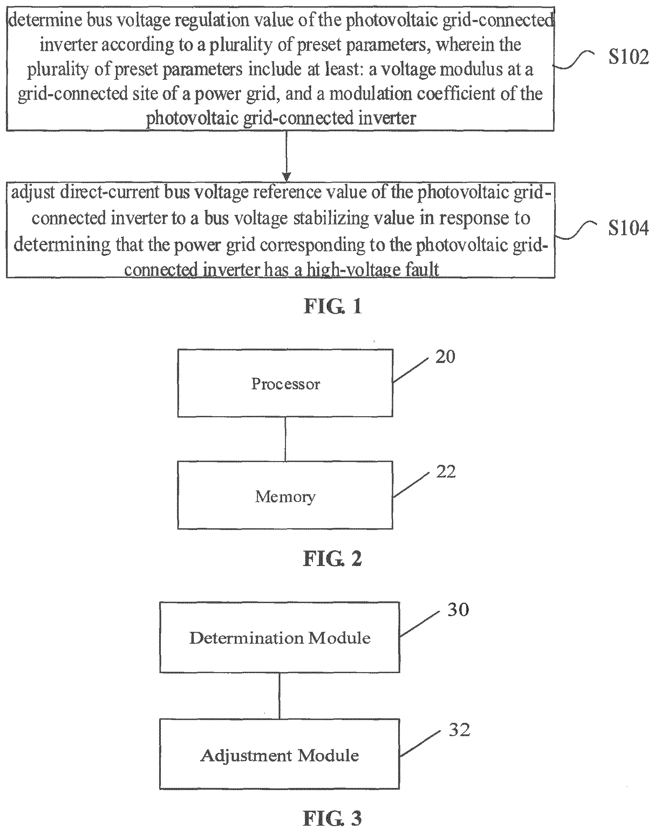

In this embodiment, a direct-current bus voltage reference value adjustment method which is operated in the photovoltaic grid-connected inverter is provided. FIG. 1 is a flowchart of a method for adjusting a direct-current bus voltage reference value according to the embodiment of the present disclosure. As shown in FIG. 1, the method includes steps of S102 and S104.

At S102, a bus voltage stabilizing value of the photovoltaic grid-connected inverter is determined according to a plurality of preset parameters, wherein the plurality of preset parameters include at least: a voltage modulus at a grid-connected site of a power grid, and a modulation coefficient of the photovoltaic grid-connected inverter.

At S104, a direct-current bus voltage reference value of the photovoltaic grid-connected inverter is adjusted to the bus voltage stabilizing value when it is determined that the power grid corresponding to the photovoltaic grid-connected inverter has a high-voltage fault.

By means of the above steps, the bus voltage stabilizing value of the photovoltaic grid-connected inverter can be determined at least according to a voltage modulus at the grid-connected site of the power grid and the modulation coefficient of the photovoltaic grid-connected inverter. When a high-voltage fault occurs in the power grid, the direct-current bus voltage reference value of the photovoltaic grid-connected inverter is adjusted to the bus voltage stabilizing value, instead of being directly adjusted to a limit value as in the existing technology, thereby solving the problem in the existing technology that the accuracy and controllability are low in an adjustment strategy and improving the accuracy and controllability of the adjustment strategy.

There are many ways to determine the bus voltage stabilizing value according to the voltage modulus at the grid-connected site of the power grid and the modulation coefficient of the photovoltaic grid-connected inverter in step S102. This embodiment of the present disclosure provides a way to first determine an estimated voltage value of an inverter bridge leg of the photovoltaic grid-connected inverter according to the voltage modulus at the grid-connected site of the power grid, and then determine the bus voltage stabilizing value according to a product of the estimated voltage value of the inverter bridge leg and the modulation coefficient. Specifically, the estimated voltage value of the inverter bridge leg is determined at least according to the following parameters: the voltage modulus at the grid-connected site of the power grid, a frequency of the power grid, an inductance value of a circuit where the photovoltaic grid-connected inverter is located, and a rated power of the photovoltaic grid-connected inverter.

In the actual operation process, the bus voltage stabilizing value U of the photovoltaic grid-connected inverter may be determined based on the following formula:

$$U = m \times \sqrt{U_{grid}^2 - 2 \times \pi \times f \times L \times P_N \div U_{grid}} \, ,$$

where $m$ denotes the modulation coefficient of the photovoltaic grid-connected inverter; $U_{grid}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

The derivation process of the above formula will be presented later, and will not repeated here.

The above adjustment process of the direct-current bus voltage reference value is only an optional embodiment. In order to better improve the accuracy of adjusting the direct-current bus voltage reference value, this embodiment of the present disclosure also takes a direct-current bus voltage withstand value of the photovoltaic grid-connected inverter into consideration, and provides the following technical schemes:

The direct-current bus voltage reference value of the photovoltaic grid-connected inverter is adjusted to the bus voltage stabilizing value according to the direct-current bus voltage withstand value and the bus voltage stabilizing value. Optionally:

An auxiliary unloading circuit connected to a direct-current bus is turned on when the bus voltage stabilizing value is greater than the direct-current bus voltage withstand value, and the direct-current bus voltage reference value of the photovoltaic grid-connected inverter is adjusted to the bus voltage stabilizing value. The direct-current bus voltage reference value refers to a voltage reference value of the direct-current bus of the photovoltaic grid-connected inverter. The auxiliary unloading circuit is configured to reduce a voltage value corresponding to the direct-current bus. That is, if the bus voltage stabilizing value is greater than the direct-current bus voltage withstand value, the photovoltaic grid-connected inverter cannot accomplish the high-voltage ride-through well just only by the adjustment method provided by the embodiment of the present disclosure, so the auxiliary unloading circuit is needed to absorb excess electric energy on the direct-current bus.

However, the direct-current bus voltage reference value of the photovoltaic grid-connected inverter is adjusted to the bus voltage stabilizing value when the bus voltage stabilizing value is less than or equal to the direct-current bus voltage withstand value.

It should be noted that if it is determined that the high-voltage fault of the power grid corresponding to the photovoltaic grid-connected inverter has been eliminated, it is necessary to electrically disconnect the auxiliary unloading circuit from the direct-current bus, rather than still maintaining a connection state between the auxiliary unloading circuit and the direct-current bus.

The aforementioned adjustment process of the direct-current bus voltage reference value will be described with an example.

In this example of the present disclosure, the above scheme will be illustrated from another point of view, and the specific schemes are understood as follows:

Whether the photovoltaic grid-connected inverter is in a high-voltage ride-through state may be determined first, the specific scheme is as follows:

First output state information on the voltage at the grid-connected site is acquired when the photovoltaic grid-connected inverter is in a normal grid-connected working mode, the first output state information here includes, but is not limited to a voltage modulus at the grid-connected site;

Whether the first output state information satisfies a first switching condition is determined; and

The photovoltaic grid-connected inverter is switched from the normal grid-connected working mode to the high-voltage ride-through mode when the first output state information satisfies the first switching condition.

Apparently, it needs to be further noted that when the photovoltaic grid-connected inverter is in the high-voltage ride-through mode, the voltage modulus at the grid-connected site may also be acquired in real time because the photovoltaic grid-connected inverter is unnecessarily maintained always in the high-voltage ride-through mode;

Whether the first output state information satisfies a second switching condition is determined; and

The photovoltaic grid-connected inverter is switched from the high-voltage ride-through mode to the normal grid-connected working mode when the first output state information satisfies the second switching condition;

In the above scheme, the step of determining whether the first output state information satisfies the first switching condition may be performed based on the following technical scheme:

When the voltage modulus at the grid-connected site is greater than a first voltage threshold, whether a first duration during which the voltage modulus at the grid-connected site is greater than the first voltage threshold reaches a first time threshold is determined; and if the first duration reaches the first time threshold, the first output state information satisfies the first switching condition, and at this time, it can be determined that the photovoltaic grid-connected inverter is in the high-voltage ride-through mode.

In this embodiment of the present disclosure, switching the photovoltaic grid-connected inverter from the normal grid-connected working mode to the high-voltage ride-through mode includes:
Executing an optimal control algorithm for a direct-current bus, and outputting a first bus voltage stabilizing value of the photovoltaic grid-connected inverter (equivalent to the bus voltage stabilizing value mentioned in the above embodiment). It should be noted that the optimal control algorithm mentioned in this embodiment of the present disclosure may be the formula mentioned in the above embodiment, but is not limited to this.

The optimal control algorithm for the direct-current bus refers to a control algorithm by which a minimum increase in bus voltage to maintain a control margin of the photovoltaic grid-connected inverter under the current grid state is outputted based on the voltage modulus at the grid-connected site, the modulation coefficient and the inductive inductance which are taken as entry parameters after certain mathematical operations are performed.

Optionally, after the first bus voltage stabilizing value is determined, the method further includes: determining a relationship between the first bus voltage stabilizing value and a bus capacitance voltage withstand threshold;
Turning on the connection between the auxiliary unloading circuit and the direct-current bus when the first bus voltage stabilizing value is greater than the bus capacitance voltage withstand threshold (equivalent to the direct-current bus voltage withstand value in the above embodiment), and meanwhile adjusting the direct-current bus reference of the photovoltaic grid-connected inverter to stabilize the same to the first bus voltage stabilizing value; and
Adjusting the bus voltage reference of the photovoltaic grid-connected inverter to stabilize the same to the first bus voltage stabilizing value when the first bus voltage stabilizing value is less than the bus capacitance voltage withstand threshold, an outer bus voltage loop error at this time is operated and outputted by a PI controller as an active current demand of an inner current loop, and a maximum allowable output value in the current state is taken as a reactive current demand.

In the above scheme, the step of determining whether the first output state information satisfies the second switching condition may be performed based on the following scheme:
When the grid-connected site voltage modulus is less than a second voltage threshold, whether a second duration during which the voltage modulus at the grid-connected site is less than or equal to the second voltage threshold reaches a second time threshold is determined; and if the second duration reaches the second time threshold, the second output state information satisfies the second switching condition.

In a further technical scheme of the embodiment of the present disclosure, in the absence of the high-voltage ride-through mode of the photovoltaic grid-connected inverter, the auxiliary unloading circuit is electrically disconnected from the direct-current bus if there is an electrical connection between the auxiliary unloading circuit and the direct-current bus; and if there is no electrical connection between the auxiliary unloading circuit and the direct-current bus, the rated voltage is taken as a second bus voltage stabilizing value, and the bus voltage is adjusted to the second bus voltage stabilizing value.

It should be noted that the method for adjusting a direct-current bus voltage reference value in this embodiment of the present disclosure may be preferably applied to the fields of power electronics and photovoltaic power generation.

In summary, when a high-voltage fault occurs in the power grid, the direct-current bus reference value of the photovoltaic grid-connected inverter is raised to the first bus voltage stabilizing value of the photovoltaic grid-connected inverter determined based on the optimal control algorithm for the bus. When the first bus voltage stabilizing reference is greater than the bus capacitance voltage withstand threshold, through a coordinated control method of turning on the auxiliary unloading circuit and executing the optimal control algorithm for the bus, the controllability of the photovoltaic grid-connected inverter during the grid surge can be ensured, an incremental step length to avoid excessive bus voltage rise can be accurately selected, and grid-connected operation during the high-voltage ride-through period can be maintained, thus assisting in the recovery of the power grid.

Through the description of the above embodiment, it will be apparent to those skilled in the art that the method in the above embodiment may be performed by means of software in combination with necessary general hardware, and of course may also be performed by hardware, but in many cases the former is a better implementation. Based on such understanding, the technical scheme of the present disclosure in essence or the part that contributes to the existing technology may be embodied in the form of a software product, which may be stored in a storage medium such as a ROM, a RAM, a magnetic disk, an optical disk, etc., including a number of instructions to enable a terminal device (which may be a mobile phone, a computer, a server, or a network device, etc.) to perform the methods described in various embodiments of the present disclosure.

Embodiment two

In this embodiment of the present disclosure, a photovoltaic grid-connected inverter is also provided, which applies the method for adjusting a direct-current bus voltage reference value according to the above embodiment. FIG. 2 is a structural block diagram of the photovoltaic grid-connected inverter according to the embodiment of the present disclosure. As shown in FIG. 2, the photovoltaic grid-connected inverter includes:

a processor 20;

a memory 22 configured to store an instruction executable by the processor;

wherein, the processor 20 is configured to determine a bus voltage stabilizing value of the photovoltaic grid-connected inverter according to a plurality of preset parameters, and adjust a direct-current bus voltage reference value of the photovoltaic grid-connected inverter to the bus voltage stabilizing value when it is determined that the power grid corresponding to the photovoltaic grid-connected inverter has a high-voltage fault, wherein the plurality of preset parameters at least include a voltage modulus at a grid-connected site of the power grid, and a modulation coefficient of the photovoltaic grid-connected inverter.

With the photovoltaic grid-connected inverter provided by the embodiment of the present disclosure, the bus voltage stabilizing value of the photovoltaic grid-connected inverter may be determined at least according to the voltage modulus at the grid-connected site of the power grid and the modulation coefficient of the photovoltaic grid-connected inverter. When a high-voltage fault occurs in the power grid, the direct-current bus voltage reference value of the photovoltaic grid-connected inverter is adjusted to the bus voltage stabilizing value, instead of being directly adjusted to a limit value as in the existing technology, thereby solving the problem in the existing technology that the accuracy and controllability are low in an adjustment strategy and improving the accuracy and controllability of the adjustment strategy.

Optionally, the processor 20 is further configured to determine an estimated value of the bus voltage stabilizing value at least according to the following parameters: the voltage modulus at the grid-connected site of the power grid, a frequency of the power grid, an inductance value of a circuit where the photovoltaic grid-connected inverter is located, and a rated power of the photovoltaic grid-connected inverter; and determine a bus voltage stabilizing value of the photovoltaic grid-connected inverter according to a product of the estimated voltage value of an inverter bridge leg and a modulation coefficient of the photovoltaic grid-connected inverter. Specifically, in this embodiment of the present disclosure, the bus voltage stabilizing value U may be determined according to the following formula:

$$U = m \times \sqrt{U_{grid}^2 - 2 \times \pi \times f \times L \times P_N \div U_{grid}} \; ,$$

where $m$ denotes the modulation coefficient of the photovoltaic grid-connected inverter; $U_{grif}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

In order to better avoid the high-voltage fault of the photovoltaic grid-connected inverter, the photovoltaic grid-connected inverter is further provided with an auxiliary unloading circuit connected to a direct-current bus. The auxiliary unloading circuit is configured to be turned on when the determined bus voltage stabilizing value is greater than the acquired direct-current bus voltage withstand value, so as to reduce the voltage value corresponding to the direct-current bus, and then absorb the electric energy on the direct-current bus.

In this embodiment of the present disclosure, the auxiliary unloading circuit may be composed of at least a relay and a resistor connected in series.

Based on the above-mentioned photovoltaic grid-connected inverter, an embodiment of the present disclosure further provides a photovoltaic power station, including any one of the above-mentioned photovoltaic grid-connected inverters.

Embodiment three

In this embodiment, a direct-current bus voltage reference value adjustment apparatus is further provided. This device is used to implement the above-mentioned embodiments and preferred implementations which have been described, which will not be repeated here. As used below, the term "module" may implement a combination of software and/or hardware with predetermined functions. The apparatus described in the following embodiment is preferably performed by software, but is also possible and conceived to be performed by hardware or a combination of software and hardware.

FIG. 3 is a structural block diagram of the direct-current bus voltage reference value adjustment apparatus in this embodiment of the present disclosure. As shown in FIG. 3, this apparatus includes:

a determination module 30 configured to determine a bus voltage stabilizing value of photovoltaic grid-connected inverter according to a plurality of preset parameters, wherein the plurality of preset parameters include at least a voltage modulus at the grid-connected site of a power grid, and a modulation coefficient of the photovoltaic grid-connected inverter; and

an adjustment module 32 configured to adjust a direct-current bus voltage reference value of the photovoltaic grid-connected inverter into the bus voltage stabilizing value when it is determined that the power grid corresponding to the photovoltaic grid-connected inverter has a high-voltage fault.

By means of the functions of various modules, the bus voltage stabilizing value of the photovoltaic grid-connected inverter may be determined at least according to the voltage modulus at the grid-connected site of the power grid and the modulation coefficient of the photovoltaic grid-connected inverter. When a high-voltage fault occurs in the power grid, the direct-current bus voltage reference value of the photovoltaic grid-connected inverter is adjusted to the bus voltage stabilizing value, instead of being directly adjusted to a limit value as in the existing technology, thereby solving the problem in the existing technology that the accuracy and controllability are low in an adjustment strategy and controllability and improving the accuracy and controllability of the adjustment strategy.

In an optional embodiment, the determination module 30 is further configured to determine an estimated voltage value of an inverter bridge leg at least according to the following parameters: the voltage modulus at the grid-connected site of the power grid, a frequency of the power grid, an inductance value of a circuit where the photovoltaic grid-connected inverter is located, and a rated power of the photovoltaic grid-connected inverter; and determine a bus voltage stabilizing value of the photovoltaic grid-connected inverter according to a product of the estimated voltage value of the inverter bridge leg and the modulation coefficient of the photovoltaic grid-connected inverter. Specifically, this determination module 30 determines a bus voltage stabilizing value U at least according to the following formula:

$$U = m \times \sqrt{U_{grid}^2 - 2 \times \pi \times f \times L \times P_N \div U_{grid}} \; ,$$

where $m$ denotes the modulation coefficient of the photovoltaic grid-connected inverter; $U_{grid}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

Optionally, the adjustment module 32 is further configured to acquire a direct-current bus voltage withstand value of the photovoltaic grid-connected inverter; and adjust the direct-current bus voltage reference value of the photovoltaic grid-connected inverter to the bus voltage stabilizing value according to the direct-current bus voltage withstand value and the bus voltage stabilizing value.

Optionally, the adjustment module 32 is further configured to turn on an auxiliary unloading circuit connected to a direct-current bus when the bus voltage stabilizing value is greater than the direct-current bus voltage withstand value, and adjust the direct-current bus voltage reference value of the photovoltaic grid-connected inverter to the bus voltage stabilizing value, the direct-current bus voltage reference value refers to a voltage reference value of the direct-current bus of the photovoltaic grid-connected inverter; and the auxiliary unloading circuit is configured to reduce a voltage value corresponding to the direct-current bus; and the direct-current bus voltage reference value of the photovoltaic grid-connected inverter is adjusted to the bus voltage stabilizing value when the bus voltage stabilizing value is less than or equal to the direct-current bus voltage withstand value.

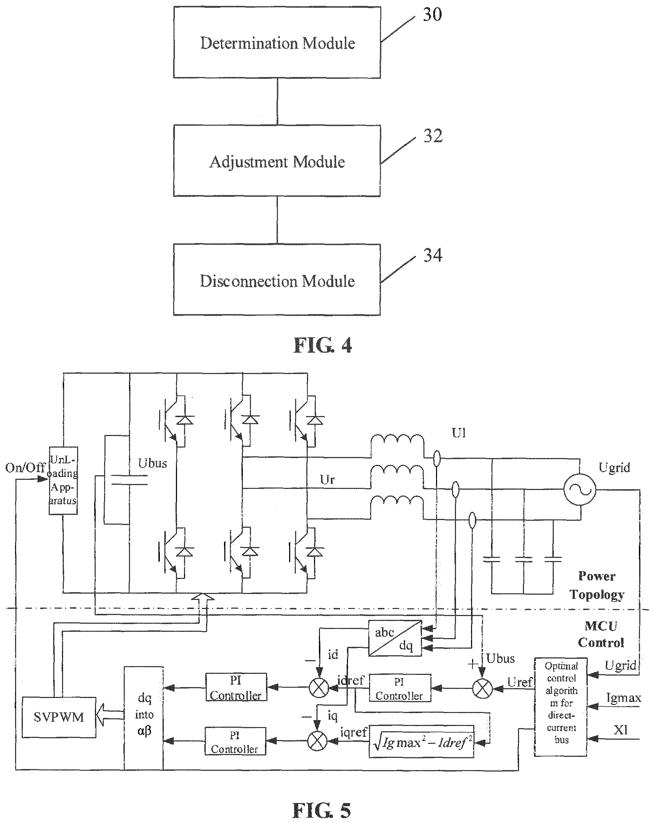

FIG. 4 is another structural block diagram of the direct-current bus voltage reference value adjustment apparatus in this embodiment of the present disclosure. As shown in FIG. 4. this apparatus further includes:
A disconnection module 34 configured to electrically disconnect the direct-current bus from the auxiliary unloading circuit when it is determined that a high-voltage fault of the power grid corresponding to the photovoltaic grid-connected inverter has been eliminated and the direct-current bus is electrically connected to the auxiliary unloading circuit.

It should be noted that the technical schemes of Embodiment one to Embodiment three may be used in combination or used alone, which will not be limited in the embodiments of the present disclosure.

The above technical schemes are described below in conjunction with preferred embodiments, but are not used to limit the technical schemes of the embodiments of the present disclosure.

Preferred Embodiment one

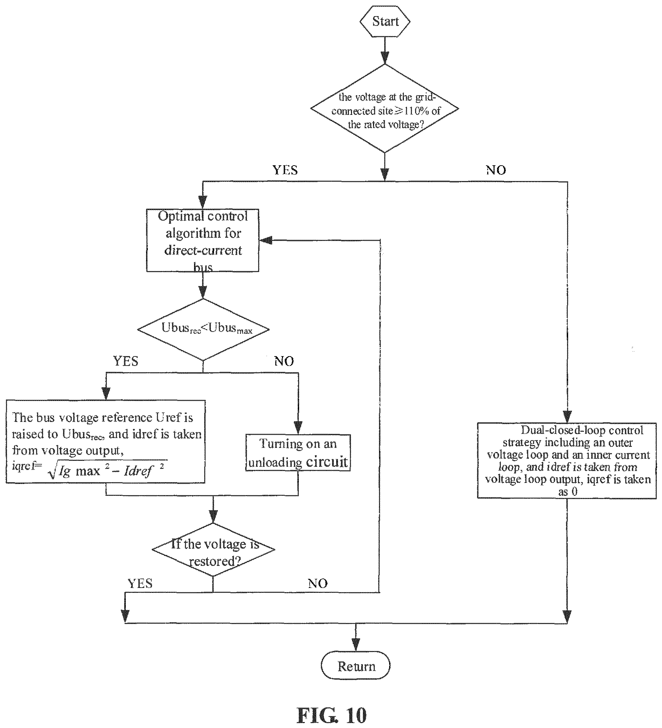

The preferred embodiment of the present disclosure provides a method and apparatus for controlling high-voltage ride-through of a photovoltaic grid-connected inverter. Based on the structure shown in FIG. 5 and the process shown in FIG. 10, the above schemes adopt the following process:

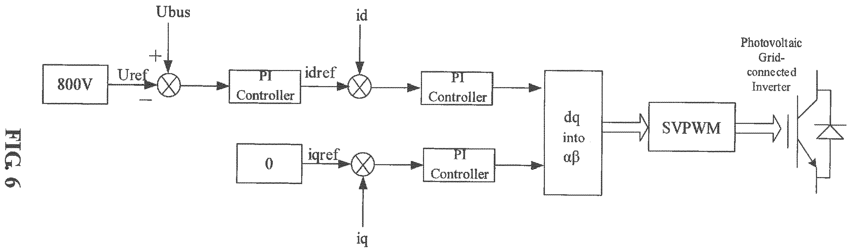

The photovoltaic grid-connected inverter detects in real time whether a voltage Ugrid modulus at the grid-connected site increases; when the voltage Ugrid modulus at the grid-connected site is less than 110% of the rated voltage (it may also be the first voltage threshold in the above example), the inverter operates in a normal photovoltaic grid-connected mode; as shown in FIG. 6, a traditional dual-closed-loop control strategy including an outer voltage loop and an inner current loop is adopted, a related working voltage of the inverter is taken as a reference value $U_{rated}$ of the outer-loop direct-current bus voltage; a difference between the direct-current bus voltage feedback Ubus and the given Urated is calculated and outputted by a PI controller as an active current d-axis demand of the current loop; a reactive current q-axis demand of the current loop is 0; the current loop demand and the feedback error are outputted by the PI controller, subjected to dq-αβ inverse conversion, and then modulated by SVPWM to generate waves to drive an IGBT to work;

If the voltage Ugrid modulus at the grid-connected site rises above 110% of the rated voltage of the power grid and this state continues for a certain period of time without change, it is determined that a high-voltage fault has occurred in the power grid; at this time, a reference recommended value $Ubus_{rec}$ for the rise of the bus voltage is acquired according to the optimal control algorithm for the direct-current bus voltage (equivalent to the first bus voltage stabilizing value or the bus voltage stabilizing value in the above embodiment), and corresponding action output is performed.

The photovoltaic grid-connected inverter system structure shown in FIG. 5 ensures the controllability of the photovoltaic grid-connected inverter during the high-voltage ride-through period without overmodulation, it is necessary to ensure that the direct-current bus voltage Ubus ≥ m (a modulation ratio, which is equivalent to the modulation coefficient of the above embodiment) * Ur (inverter bridge leg voltage).

According to the corresponding relationship between the direct-current bus voltage and the inverter bridge leg voltage, it is necessary to acquire a minimum value of the corresponding inverter bridge leg voltage Ur, in order to obtain an optimal boost value of the direct-current bus voltage Ubus during the high-voltage ride-through period.

As shown in the power topology in FIG. 5, the bridge leg voltage Ur, the inductor voltage U1 and the grid voltage Ugrid satisfy the following physical relationship:

$$\overrightarrow{Ur} = \overrightarrow{Ul} + \overrightarrow{Ugrid} \qquad (1\text{-}1).$$

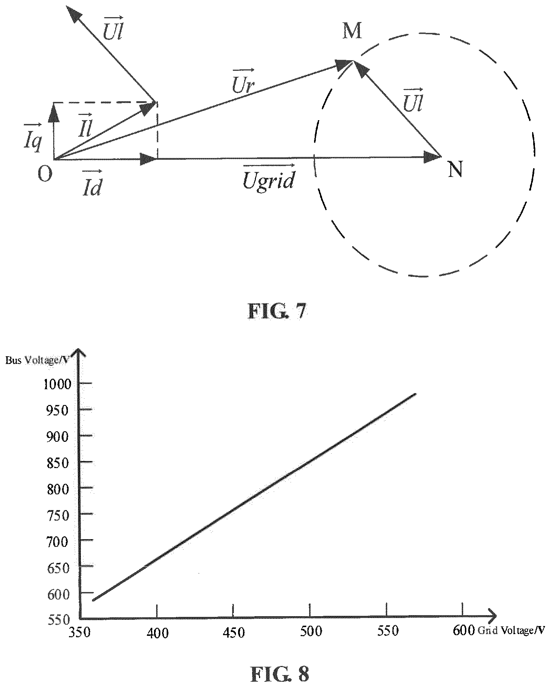

The relationship among the bridge leg voltage Ur, the inductor voltage U1 and the grid voltage Ugrid in Formula (1-1) is presented in a vector form. As shown in FIG. 7, Il is a grid-connected inductor current; Id is a d-axis component of the inductor current; Iq is a q-axis component of the inductor current; and Ul is an inductor voltage component. Due to the characteristics of the inductor, the inductor voltage Ul leads the inductor current Il by 90 degrees; Ugrid is the grid voltage. In order to obtain the inverter bridge leg voltage $\overrightarrow{Ur}$, the inductance voltage $\overrightarrow{Ul}$ is translated to the end N of the grid voltage $\overrightarrow{Ugrid}$, and the result of connecting $\overrightarrow{Ugrid}$ and $\overrightarrow{Ul}$ end to end is the bridge leg voltage $\overrightarrow{Ur}$.

Assuming that the modulus of the grid-connected current Il does not change, the specific value of the inductor voltage may be acquired from Formula (1-2):

$$Ul = 2 \times \pi \times f \times l \times Il \quad (1\text{-}2),$$

where π is a Pi constant, taking 3.1415926; f is a grid frequency, taking 50Hz; and 1 is an inductance value. As can be seen from the well-known formula (1-2), when the modulus of the inductor current Il is constant, the modulus of the inductor voltage Ul is also constant. When the modulus of the inductor current Il modulus does not change, but d-axis and q-axis projections of the inductor current Il change, that is, when a phase difference between the grid-connected current and the grid voltage is constantly changing, the inductor voltage vector Ul may be equivalently regarded as rotating a circle by taking a point N as a circle center and the modulus of the inductor voltage Ul as a radius. In view of the vector principle diagram of the optimal control algorithm for the direct-current bus shown in FIG. 7, it is known that a connection line between a zero point O and any point on the circumference is the bridge leg voltage $\overrightarrow{Ur}$.

The minimum modulus of the bridge leg voltage $|\overrightarrow{Ur}|$ may be equivalent to a shortest distance from the origin O to the circumference with the point N as the center and Ul as the radius. As known from mathematical knowledge, a minimum distance from a point outside the circle to the circle is the shortest tangent, that is, when a straight line OM is tangent to the circle N, the modulus of the bridge leg voltage vector Ur is the minimum. At this time, the triangle ONM is a right-angled triangle. As can be seen from the Pythagorean theorem, the length of the right-angle side OM is:

$$OM = Ur = \sqrt{Ugrid \times Ugrid - Ul \times Ul} \quad (1\text{-}3).$$

According to the Ohm's law, the value of inductor voltage Ul is shown in Formula (1-2), where Il is the value of inductor current. The larger the value of inductor current is, the greater the value of inductor voltage Ul is, and the shorter the length of the right-angle side OM is, that is, the lower the bridge leg voltage Ur is. Therefore, the inductor current Il takes the maximum value Imax=$P_N$/Ugrid, $P_N$ is the rated power of the photovoltaic grid-connected inverter, and Ugrid takes a real-time calculated modulus of the grid voltage.

As known from the modulation relationship of the photovoltaic grid-connected inverter, the following relationship exists between the direct-current bus voltage and the bridge leg voltage:

$$\min(\mathrm{Ubus}) = \mathrm{m} \times \mathrm{Ur} \quad (1\text{-}4),$$

where m is the modulation coefficient. For sinusoidal pulse width modulation (SPWM); m is 2, and for space vector pulse width modulation (SVPWM), m is $\sqrt{3}$. The preferred embodiment of the present disclosure adopts SVPWM modulation, and m takes $\sqrt{3}$.

From Formulas (1-2), (1-3) and (1-4), it can be known that an optimal bus boost value Ubus$_{rec}$ of the optimal control algorithm for the direct-current bus during the high-voltage ride-through period invented by the preferred embodiment of the present disclosure may be quantitatively described by the mathematical formula (1-5):

$$\mathrm{Ubus}_{\mathrm{rec}} = \mathrm{m} \times \sqrt{\mathrm{Ugrid}_M{}^2 - 2 \times \pi \times f \times L \times P_N \div \mathrm{Ugrid}_M} \quad (1\text{-}5).$$

The external characteristics of the optimal control algorithm for the direct-current bus are shown in FIG. 8, where the abscissa is the grid voltage Ugrid modulus, with a value range of 350 V to 600 V; and the ordinate is the optimal boost reference value Ubus$_{rec}$ of the direct-current bus, with a value range of 550 V to 1000 V. The external characteristic diagram of the optimal control algorithm for the direct-current bus defaults to the grid frequency of 50 Hz, the inductance L of 500 uH, and the grid-connected rated power of 50 kW. It should be understood that implementing the optimal control algorithm for the direct-current bus of the present disclosure in various forms falls within the protection scope of the embodiments of the present disclosure and should not be limited by specific values such as 50 Hz and 500 uH.

Optionally, the preferred embodiment of the present disclosure also provides the following technical schemes: the optimal boost value Ubus$_{rec}$ of the direct-current bus (equivalent to the bus voltage stabilizing value in the above embodiment) during the high-voltage ride-through period is compared with a direct-current bus voltage withstand limit value Ubus$_{max}$ of the inverter (equivalent to the direct-current bus voltage withstand value of the above embodiment), if Ubus$_{rec}$ is greater than the bus capacitance voltage withstand Ubus$_{max}$, the photovoltaic grid-connected inverter cannot complete the high-voltage ride-through only by using the software control algorithm to increase the bus voltage. Therefore, the auxiliary unloading circuit needs to be turned on to absorb the instantaneous excess energy of the direct-current bus, and meanwhile the bus reference of the photovoltaic grid-connected inverter is adjusted to the optimal control algorithm Ubus$_{rec}$ for the direct-current bus.

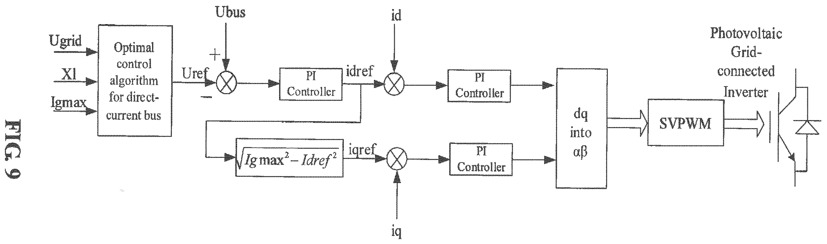

If the optimal boost value Ubus$_{rec}$ of the direct-current bus is less than or equal to the direct-current bus voltage withstand Ubus$_{max}$ of the inverter, the high-voltage fault ride-through may be completed by raising the bus voltage reference without turning on the auxiliary unloading circuit. The high-voltage ride-through control strategy of the photovoltaic inverter is shown in FIG. 9. The dual-closed-loop control strategy having an outer voltage loop and an inner current loop is adopted. The direct-current bus reference Ubus$_{rec}$ is outputted through the optimal control algorithm for the direct-current bus during the high-voltage ride-through according to the Ugrid, the inductive inductance X1, the maximum inductance current Il$_{max}$ and other input parameters, and taken as an outer voltage loop demand. After a difference between the direct-current bus voltage feedback Ubus and the demand is calculated, the PI controller outputs the difference as an active current inner-loop reference demand Id$_{ref}$, and meanwhile the reactive current inner-loop reference iq$_{ref}$ is taken as:

$$\mathrm{iq}_{ref} = \sqrt{i_N \times i_N - \mathrm{id}_{ref} \times \mathrm{id}_{ref}} \quad (1\text{-}6),$$

where $i_N$ is a rated working current of the inverter, taking $P_N$/Ugrid, and id$_{ref}$ is the active current inner-loop reference value; a difference between the current inner-loop reference and the feedback Ubus is calculated, then operated and outputted by the PI controller, subjected to dq-$\alpha\beta$ inverse conversion, and then modulated by the SVPWM to generate waves to drive the IGBT to work. At this time, the photovoltaic grid-connected inverter outputs a maximum rated power, the grid-connected current value is the maximum, the inductor voltage drop reaches the maximum, the inverter bridge leg voltage reaches the minimum, and the direct-current bus voltage rises at a minimum amplitude while still maintaining the controllability of the photovoltaic grid-connected inverter.

The preferred embodiment of the present disclosure also provides a technical scheme that can detect in real time whether the voltage Ugrid at the grid-connected site is restored to a normal value, that is, whether the power grid still has a high-voltage fault; and if the voltage Ugrid is not restored, to the process returns and continues to perform the above control algorithm, and then adjust the reference value of the direct-current bus. If the grid voltage is restored, the normal grid-connected mode is switched.

Embodiment four

This embodiment of the present disclosure provides a storage medium having stored therein a program, which when operated, executes any of the above-mentioned methods.

Optionally, in this embodiment, the storage medium may be configured to store program codes for executing the following steps:

At S1, a bus voltage stabilizing value of the photovoltaic grid-connected inverter is determined according to a plurality of preset parameters, wherein the plurality of preset parameters include at least a voltage modulus at a grid-connected site of a power grid, and a modulation coefficient of the photovoltaic grid-connected inverter; and

At S2, a direct-current bus voltage reference value of the photovoltaic grid-connected inverter is adjusted to the bus voltage stabilizing value when it is determined that the power grid corresponding to the photovoltaic grid-connected inverter has a high-voltage fault.

Optionally, in this embodiment, the storage medium may include, but is not limited to, a U disk, a read-only memory (ROM), a random access memory (RAM), a mobile hard disk, a magnetic disk, an optical disk or other media that can store program codes.

Optionally, for specific examples in this embodiment, reference may be made to the examples described in the above-mentioned embodiments and alternative implementations, and this embodiment will not be repeated here.

Apparently, those skilled in the art should understand that the aforementioned modules or steps of the present disclosure may be performed by a general computing device, may be concentrated on a single computing device, or distributed on a network composed of a plurality of computing devices, and optionally, may be performed with program codes executable by the computing device and thus may be stored in a storage device to be executed by the computing device. In some cases, the steps shown or described may be executed in a different order than here. Alternatively, the modules or steps may be performed by separately manufacturing the modules or step into individual integrated circuit modules, or by manufacturing some of the modules or steps into a single integrated circuit module. In this way, the present disclosure is not limited to any specific combination of hardware and software.

The above description is only preferred embodiments of the present disclosure, and is not intended to limit the scope of the disclosure. For those skilled in the art, the present disclosure may have various modifications and changes. Any modifications, equivalent substitutions, improvements made within the principles of the present disclosure are constructed to fall within the protection scope of the present disclosure.

**Industrial Applicability**

As described above, the method and the apparatus for adjusting a direct-current bus voltage reference value, and the photovoltaic grid-connected inverter provided by an embodiment of the present invention have the following beneficial effects: the problem in the existing technology that the accuracy and controllability are low in an adjustment strategy where the direct-current bus voltage reference value of a photovoltaic grid-connected inverter directly increased to a limit value is solved, and the accuracy and controllability of the adjustment strategy are improved.

**Claims**

**1.**  A method for adjusting a direct-current bus voltage reference value, comprising:

determining a bus voltage stabilizing value of a photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter; and

adjusting the direct-current bus voltage reference value of the photovoltaic grid-connected inverter to the bus voltage stabilizing value in response to determining that the power grid corresponding to the photovoltaic grid-connected inverter has a high-voltage fault.

2. The method of claim 1, wherein determining a bus voltage stabilizing value of a photovoltaic grid-connected inverter according to a plurality of preset parameters comprises:

determining an estimated voltage value of an inverter bridge leg of the photovoltaic grid-connected inverter according to at least the following parameters: the voltage modulus at the grid-connected site of the power grid, a frequency of the power grid, an inductance value of a circuit where the photovoltaic grid-connected inverter is located, and a rated power of the photovoltaic grid-connected inverter; and
determining the bus voltage stabilizing value of the photovoltaic grid-connected inverter according to a product of the estimated voltage value of the inverter bridge leg and the modulation coefficient of the photovoltaic grid-connected inverter.

3. The method of claim 1, wherein determining the bus voltage stabilizing value of the photovoltaic grid-connected inverter according to at least the following formula:

$$U = m \times \sqrt{U_{grid}^2 - 2 \times \pi \times f \times L \times P_N \div U_{grid}} \quad ,$$

where $m$ denotes the modulation coefficient of the photovoltaic grid-connected inverter; $U_{grid}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

4. The method of claim 1, wherein adjusting the direct-current bus voltage reference value of the photovoltaic grid-connected inverter to the bus voltage stabilizing value comprises:

acquiring a direct-current bus voltage withstand value of the photovoltaic grid-connected inverter; and
adjusting the direct-current bus voltage reference value of the photovoltaic grid-connected inverter to the bus voltage stabilizing value according to the direct-current bus voltage withstand value and the bus voltage stabilizing value.

5. The method of claim 4, wherein adjusting the direct-current bus voltage reference value of the photovoltaic grid-connected inverter to the bus voltage stabilizing value according to the direct-current bus voltage withstand value and the bus voltage stabilizing value comprises:

turning on an auxiliary unloading circuit connected to a direct-current bus and adjusting the direct-current bus voltage reference value of the photovoltaic grid-connected inverter to the bus voltage stabilizing value in response to the bus voltage stabilizing value being greater than the direct-current bus voltage withstand value, wherein the direct-current bus voltage reference value refers to a voltage reference value of the direct-current bus of the photovoltaic grid-connected inverter, and the auxiliary unloading circuit is configured to reduce a voltage value corresponding to the direct-current bus; and
adjusting the direct-current bus voltage reference value of the photovoltaic grid-connected inverter to the bus voltage stabilizing value in response to the bus voltage stabilizing value being less than or equal to the direct-current bus voltage withstand value.

6. The method of claim 5, wherein after adjusting the direct-current bus voltage reference value of the photovoltaic grid-connected inverter to the bus voltage stabilizing value, the method further comprises:
electrically disconnecting the direct-current bus from the auxiliary unloading circuit in response to determining that the high-voltage fault of the power grid corresponding to the photovoltaic grid-connected inverter has been eliminated and the direct-current bus is electrically connected to the auxiliary unloading circuit.

7. A photovoltaic grid-connected inverter, comprising:

a processor; and

a memory configured to store an instruction executable by the processor;

wherein, the processor is configured to determine a bus voltage stabilizing value of the photovoltaic grid-connected inverter according to a plurality of preset parameters, and adjust the direct-current bus voltage reference value of the photovoltaic grid-connected inverter to the bus voltage stabilizing value in response to determining that the power grid corresponding to the photovoltaic grid-connected inverter has a high-voltage fault, wherein the plurality of preset parameters at least comprise a voltage modulus at a grid-connected site of the power grid, and a modulation coefficient of the photovoltaic grid-connected inverter.

8. The photovoltaic grid-connected inverter of claim 7, wherein the processor is further configured to determine an estimated voltage value of an inverter bridge leg of the photovoltaic grid-connected inverter according to at least the following parameters: the voltage modulus at the grid-connected site of the power grid, a frequency of the grid, an inductance value of a circuit where the photovoltaic grid-connected inverter is located, and a rated power of the photovoltaic grid-connected inverter; and determine the bus voltage stabilizing value of the photovoltaic grid-connected inverter according to a product of the estimated voltage value of the inverter bridge leg and the modulation coefficient of the photovoltaic grid-connected inverter.

9. The photovoltaic grid-connected inverter of claim 8, wherein the processor is further configured to determine a bus voltage stabilizing value U of the photovoltaic grid-connected inverter at least according to the following formula:

$$U = m \times \sqrt{U_{grid}^2 - 2 \times \pi \times f \times L \times P_N \div U_{grid}}$$

where $m$ denotes the modulation coefficient of the photovoltaic grid-connected inverter; $U_{grid}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

10. The photovoltaic grid-connected inverter of claim 7, further comprising: an auxiliary unloading circuit connected to a direct-current bus and configured to reduce a voltage value corresponding to the direct-current bus in response to the determined bus voltage stabilizing value being greater than a acquired direct-current bus voltage withstand value.

11. The photovoltaic grid-connected inverter of claim 10, wherein the auxiliary unloading circuit is composed of at least the following devices connected in series: a relay and a resistor.

12. An apparatus for adjusting a direct-current bus voltage reference value, comprising:

a determination module, which is configured to determine a bus voltage stabilizing value of the photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter; and
an adjustment module, which is configured to adjust a direct-current bus voltage reference value of the photovoltaic grid-connected inverter to the bus voltage stabilizing value in response to determining that the power grid corresponding to the photovoltaic grid-connected inverter has a high-voltage fault.

13. The apparatus of claim 7, wherein the determination module is further configured to:

determine an estimated voltage value of an inverter bridge leg of the photovoltaic grid-connected inverter according to at least the following parameters: the voltage modulus at the grid-connected site of the power grid, a frequency of the power grid, an inductance value of a circuit where the photovoltaic grid-connected inverter is located, and a rated power of the photovoltaic grid-connected inverter; and
determine the bus voltage stabilizing value of the photovoltaic grid-connected inverter according to a product of the estimated voltage value of the inverter bridge leg and the modulation coefficient of the photovoltaic grid-connected inverter.

14. The apparatus of claim 13, wherein the determination module is further configured to determine a bus voltage stabilizing value U of the photovoltaic grid-connected inverter according to at least the following formula:

$$U = m \times \sqrt{U_{grid}^2 - 2 \times \pi \times f \times L \times P_N \div U_{grid}}$$

where $m$ denotes the modulation coefficient of the photovoltaic grid-connected inverter; $U_{grid}$ denotes the voltage modulus at the grid-connected site of the power grid; $f$ denotes the frequency of the power grid; $L$ denotes the inductance value of the circuit where the photovoltaic grid-connected inverter is located; and $P_N$ denotes the rated power of the photovoltaic grid-connected inverter.

15. A photovoltaic power station, comprising the photovoltaic grid-connected inverter of any one of claims 7 to 11.

16. A storage medium storing a computer program which is configured to, when executed, perform the method of any one of claims 1 to 6.

determine bus voltage regulation value of the photovoltaic grid-connected inverter according to a plurality of preset parameters, wherein the plurality of preset parameters include at least: a voltage modulus at a grid-connected site of a power grid, and a modulation coefficient of the photovoltaic grid-connected inverter — S102

adjust direct-current bus voltage reference value of the photovoltaic grid-connected inverter to a bus voltage stabilizing value in response to determining that the power grid corresponding to the photovoltaic grid-connected inverter has a high-voltage fault — S104

**FIG. 1**

Processor — 20

Memory — 22

**FIG. 2**

Determination Module — 30

Adjustment Module — 32

**FIG. 3**

**FIG. 4**

**FIG. 5**

FIG. 6

**FIG. 7**

**FIG. 8**

FIG. 9

EP 3 796 507 A1

```
                    ┌──────────┐
                    │  Start   │
                    └────┬─────┘
                         │
                         ▼
              ◇ the voltage at the grid-
              connected site ≥ 110% of
                  the rated voltage? ◇
         YES ──────────┬────────────── NO
          │            │                │
          ▼            │                │
   ┌─────────────┐     │                │
   │Optimal control│◄──┘                │
   │ algorithm for │                    │
   │ direct-current│                    │
   │     bus       │                    │
   └──────┬────────┘                    │
          ▼                             │
      ◇ Ubus_rec < Ubus_max ◇          │
   YES ──────┬────── NO                 │
```

Optimal control algorithm for direct-current bus

$Ubus_{rec} < Ubus_{max}$

The bus voltage reference Uref is raised to Ubus$_{rec}$, and idref is taken from voltage output,

$iqref = \sqrt{Ig\,max^2 - Idref^2}$

Turning on an unloading circuit

If the voltage is restored?

Dual-closed-loop control strategy including an outer voltage loop and an inner current loop, and idref is taken from voltage loop output, iqref is taken as 0

Return

**FIG. 10**

**INTERNATIONAL SEARCH REPORT**

| International application No. |
|---|
| **PCT/CN2019/088354** |

**A. CLASSIFICATION OF SUBJECT MATTER**

H02J 3/38(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, DWPI, CNKI: 光伏, 逆变, 高电压, 高压, 故障, 穿越, 直流母线电压, 参考值, 设定值; PV, solar, photovoltaic, inverter, high, voltage, ride, through, HVRT, failure, fault, DC, bus, reference, set, value

**C. DOCUMENTS CONSIDERED TO BE RELEVANT**

| Category* | Citation of document, with indication, where appropriate, of the relevant passages | Relevant to claim No. |
|---|---|---|
| X | 郑重等 (ZHENG, Zhong et al.). "新能源发电系统并网逆变器的高电压穿越控制策略 (High Voltage Ride-through Control Strategy of Grid-connected Inverter for Renewable Energy Systems)" 中国电机工程学报 (Proceedings of the CSEE), Vol. 35, No. no. 06, 20 March 2015 (2015-03-20), ISSN: 0258-8013, p. 1463, instruction part to p. 1470, conclusion part | 1, 2, 7, 8, 12, 13, 15, 16 |
| X | CN 107069809 A (XIANGTAN ELECTRIC MANUFACTURING CO., LTD.) 18 August 2017 (2017-08-18) description, paragraphs 19-26, and figure 1 | 1, 2, 7, 8, 12, 13, 15, 16 |
| A | CN 104935006 A (XUJI GROUP CORPORATION ET AL.) 23 September 2015 (2015-09-23) entire document | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 August 2019** | **29 August 2019** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/088354**

| Patent document cited in search report | | | Publication date (day/month/year) | Patent family member(s) | | | Publication date (day/month/year) |
|---|---|---|---|---|---|---|---|
| CN | 107069809 | A | 18 August 2017 | None | | | |
| CN | 104935006 | A | 23 September 2015 | CN | 104935006 | B | 07 July 2017 |
| | | | | IN | 201644014196 | A | 16 December 2016 |

Form PCT/ISA/210 (patent family annex) (January 2015)